# DEMANDE DE BREVET EUROPEEN

(11) **EP 0 884 737 A1**
(43) Date de publication de la demande: **16.12.1998**
(21) Numéro de dépôt: 98401356.5
(22) Date de dépôt: 08.06.1998
(51) Int. Cl.: H01B 3/04, D21H 13/44, D21H 25/06

(54) **Ruban micacé isolant électrique, poreux comprenant un vernis réticulable par rayonnement UV, sa fabrication et ses applications**

(30) Priorité: 13.06.1997 FR 9707377
(71) Demandeur: GEC ALSTHOM ELECTROMECANIQUE SA, 75116 Paris (FR)
(72) Inventeur: Dubuisson, Alain, 69008 Lyon (FR); Kamenetsky, Daniel, 69480 Pommiers (FR)
(74) Mandataire: Gosse, Michel

(57) **Abrégé**

Ruban micacé isolant électrique, poreux, comprenant un papier de mica collé sur au moins un support flexible au moyen d'un vernis photoréticulable par rayonnement ultra-violet, caractérisé en ce que le vernis présente une viscosité très faible, inférieure à environ 250 mPa.s à 20°C, avant exposition aux rayons ultra-violets.

## Description

L'invention concerne l'isolation de conducteurs électriques au moyen d'un ruban micacé poreux que l'on enroule autour desdits conducteurs. Le ruban micacé comprend un papier de mica collé sur au moins un support au moyen d'un vernis qui y a été déposé sous forme d'une résine liquide polymérisable, laquelle a été ensuite polymérisée in situ.

Les vernis actuellement utilisés sont en général appliqués sous forme d'une solution dans un solvant organique, comme décrit par exemple dans le brevet FR 89 10532 (GEC ALSTHOM ; déposé le 4 août 1989) ou dans le brevet US 4 661 397 (WESTINGHOUSE ELEC. CORP. ; déposé le 7 mars 1986).

L'utilisation de tels vernis présente des inconvénients. En effet, le séchage s'effectuant par chauffage, la fabrication des rubans en question n'est économiquement pas avantageuse. De plus, les rubans obtenus manquent souvent de flexibilité. Enfin, l'utilisation de solvants organiques est polluante et les traces de solvant résiduel dans le ruban nuisent à ses qualités électriques.

L'invention a pour but d'éliminer, au moins dans une large mesure, ces inconvénients.

De façon surprenante, on a maintenant trouvé selon l'invention que ce but est atteint en utilisant un vernis photoréticulable par rayonnement ultra-violet (UV) et présentant une viscosité très faible, c'est-à-dire inférieure à environ 250 mPa.s à 20°C, avant exposition aux rayons ultra-violets.

A ce jour, les formulations de vernis photoréticulables par rayonnement UV sont employées dans des revêtements, des encres, en électronique et dans des adhésifs. Jusqu'à présent, personne n'avait imaginé qu'il serait possible de les employer en ruban micacé car le taux de minéraux y dépasse toujours 50 % en poids et parfois même 90 % en poids.

Selon l'un de ses aspects, l'invention a pour objet un ruban micacé isolant électrique, poreux, comprenant un papier de mica collé sur au moins un support flexible au moyen d'un vernis, caractérisé en ce que ledit vernis est photoréticulable par rayonnement ultra-violet.

De préférence, le vernis présente un viscosité très faible, inférieure à environ 250 mPa.s à 20°C, avant exposition aux rayons ultra-violets.

L'utilisation d'un tel vernis permet l'imprégnation très rapide du papier de mica en l'absence de solvant organique. On obtient un bon mouillage et la qualité du ruban est améliorée par rapport aux rubans de l'art antérieur. En particulier, il présente une grande flexibilité, qualité très recherchée pour l'application d'un ruban de type mica autour d'un conducteur généralement en cuivre, de section variable.

De plus, la viscosité d'un tel vernis, lorsqu'il est soumis à un rayonnement UV, augmente très vite (une fraction de seconde suffit), ce qui permet d'assurer le collage du mica sur un support et une grande cohésion des paillettes de mica dans un temps beaucoup plus court qu'avec les vernis de l'art antérieur. On obtient ainsi une grande productivité.

Les procédés habituellement employés nécessitent l'évaporation progressive des solvants organiques sinon leur départ brutal provoque l'éclatement ou le soulèvement des paillettes de mica. L'évaporation progressive des solvants exige soit une vitesse de défilement de la bande très lente (environ 2 m/min) avec un four de séchage court (environ 4 m), soit une vitesse de défilement modérée (de l'ordre de 5 à 15 m/min) avec un four de grande longueur (environ 12 m).

Non seulement le procédé de traitement par rayonnement UV élimine l'utilisation d'un four à air chaud très coûteux et réduit la surface de production nécessaire, mais permet d'utiliser des vitesses de défilement pouvant atteindre des valeurs inespérées allant jusqu'à 50 m/min, voire davantage.

L'absence de solvant organique fournit un procédé écologique qui supprime l'émission de composés organiques volatils (COV) dans l'atmosphère environnante.

L'utilisation de vernis photopolymérisables par rayonnement UV est donc économique et non polluante.

Les compositions de vernis utilisées selon la présente invention comprennent des monomères à fonction acrylate ou méthacrylate [ci-après (méth)acrylate] éventuellement en mélange avec des oligomères à fonction (méth)acrylate et leur viscosité est inférieure à 350 mPa.s à 20°C, de préférence inférieure à 250 mPa.s à 20°C.

Les (méth)acrylates utilisés sont avantageusement modifiés par des groupes époxydes, polyesters, polyéthers, polyuréthanes et/ou silicones.

Les oligomères (méth)acrylates modifiés sont des polymères de masses moléculaires variables, à savoir de 300 à 1000000. Les meilleurs collages sont obtenus avec des oligomères de ce type ayant des viscosités supérieures à 3000 mPa.s à 60°C.

Les monomères (méth)acrylates sont des molécules de masses moléculaires moindres (inférieures à 1000) avec lesquelles les meilleurs mouillages du mica sont obtenus pour des viscosités inférieures à 100 mPa.s. à 20°C. Leur fonctionnalité varie généralement de 1 à 6 mais est parfois supérieure.

Quand des monomères monofonctionnels sont employés seuls, ils permettent, sous rayonnement UV, l'obtention de polymères thermoplastiques particulièrement flexibles, tandis que lorsque des monomères bi- ou plurifonctionnels sont utilisés, ils donnent des réseaux tridimensionnels plus rigides.

Les formulations de vernis photoréticulable selon l'invention contiennent un ou plusieurs photoamorceurs qui initient la polymérisation radicalaire ou cationique.

Dans le cas des (méth)acrylates modifiés, les photoamorceurs radicalaires sont préférés.

Ces photoamorceurs sont caractérisés par leur spectre d'absorption. Dans le cas de la présente invention, du fait de la présence de mica, les photoamorceurs de longueurs d'ondes supérieures à 280 nm sont préférés, tout particulièrement pour des rubans à base de mica muscovite avec des épaisseurs allant de 50 à 300 µm (cas fréquent pour les rubans selon l'invention).

Une combinaison de plusieurs photoamorceurs est préférée pour agir à la fois en surface et en profondeur.

Des activateurs, présentant par exemple une fonction amine, peuvent également être utilisés pour accélérer la polymérisation.

Le support est de préférence un tissu de verre, un film en polymère thermoplastique ou un non-tissé polyester.

Les tissus de verre ont un grammage allant jusqu'à 70 g/m², de préférence de 19 à 50 g/m².

Les films polymères thermoplastiques ont une épaisseur inférieure à 70 µm et sont à base de polyester, de polyimide, de polycarbonate ou de polyéthersulfone. Selon l'invention, on préfère un film de polytéréphtalate d'éthylène glycol ayant une épaisseur de 6 à 50 µm.

Les non-tissés polyesters utilisés selon l'invention ont de préférence un grammage inférieur à 50 g/m².

Comme papier de mica, on utilise de préférence un papier de mica phlogopite ou muscovite, notamment pour l'isolation électrique haute tension, avec des grammages allant jusqu'à 380 g/m², de préférence de 45 à 250 g/m².

L'invention a également pour objet un procédé de fabrication du ruban micacé selon l'invention, caractérisé en ce qu'il comprend les étapes consistant à:
- imprégner un papier de mica, en contact avec un support, avec une composition de vernis photoréticulable par un rayonnement UV, en phase liquide ;
- déposer une composition de surlaquage photoréticulable par un rayonnement UV sur le papier de mica ainsi imprégné ; et
- soumettre l'ensemble à un rayonnement ultra-violet pendant une durée suffisante pour réticuler lesdites compositions.

Selon une variante, l'invention a pour objet un procédé de fabrication du ruban micacé selon l'invention, caractérisé en ce qu'il comprend les étapes consistant à:
- imprégner un papier de mica, en contact avec un support, avec une composition de vernis photoréticulable par un rayonnement UV, en phase liquide ;
- soumettre l'ensemble à un rayonnement ultra-violet pendant une durée suffisante pour réticuler ladite composition de vernis ;
- déposer une composition de surlaquage photoréticulable par un rayonnement UV sur l'ensemble résultant ; et
- soumettre le tout à un rayonnement ultra-violet pendant une durée suffisante pour réticuler ladite composition de surlaquage.

La quantité de vernis imprégnée est avantageusement de 2 à 20 % en poids du poids total du ruban.

La source de lumière UV peut être, par exemple,une lampe à mercure (pression moyenne) ou à xénon (forte pression) avec allumage par électrode ou système micro-onde. Les puissances préférées de ces lampes vont de 80 à 280 W/cm.

L'invention a en outre pour objet un conducteur isolé par un ruban isolant poreux selon l'invention.

Un ruban trop rigide subit des fissures dans le mica lors de sa pose sur le conducteur. Ces fissures sont à l'origine de faiblesses diélectriques dans l'isolation recherchée. Les formulations de vernis selon l'invention permettent d'élaborer des polymères très linéaires, c'est-à-dire peu ramifiés par des monomères ou des oligomères polyfonctionnels.

Les espèces monoacrylates ou monométhacrylates qui possèdent un groupe latéral volumineux ou long, sont particulièrement bien adaptées pour obtenir une grande flexibilité des chaînes polymériques, qualité particulièrement recherchée dans la fabrication de rubans isolants électriques.

Le conducteur isolé selon l'invention peut être fabriqué par un procédé qui comprend les étapes consistant à :
- enrouler le ruban selon l'invention autour du conducteur à isoler ;
- effectuer une imprégnation complémentaire par une ou plusieurs résines au moyen d'un procédé de trempé en cuve ou en autoclave ; et
- polymériser l'ensemble du système obtenu.

L'opération de trempé s'effectue avantageusement avec application alternée de vide et de pression.

Les résines utilisées pour ce trempé sont de préférence sans solvant. Il s'agit par exemple d'époxydes, d'époxydes modifiés styrènés, d'époxydes modifiés polyesters insaturés, de polyesters insaturés, de polyester-imides, de silicones, d'hétérocycles à base d'époxydes et d'isocyanates, etc. Il peut également s'agir de résines (méth)acrylates ou d'autres encore.

Quelles que soient les résines utilisées, il faut s'assurer de leur compatibilité chimique avec les formulations de vernis présentes dans le ruban micacé.

L'invention a également pour objet des systèmes d'isolation comprenant un ou plusieurs rubans micacés selon l'invention, tels que définis plus haut.

Les exemples qui suivent sont destinés à illustrer et mieux expliquer l'invention.

### Exemple 1:

### Ruban obtenu par collage d'un film polyester (téréphtalate d'éthylène glycol) d'épaisseur 23 µm et d'un papier de mica de grammage 75 g/m²

L'adhésif est un vernis de type acrylate ayant la composition suivante en parties en poids :
- Nonyl phénol éthoxylé monoacrylate 95
- Oligomère uréthane aliphatique diacrylate 5
- Isopropyl thioxanthone 1
- Oligoamine 4
- Amino acétophénone 2

Sa viscosité est de 250 mPa.s à 20°C.

Le vernis est utilisé à raison de 8% du poids total du ruban.

La proportion serait de 2% en surlaquage par un autre vernis.

Le passage en machine d'imprégnation a lieu à une vitesse triple de celle utilisée avec les vernis habituellement utilisés jusqu'à présent.

La flexibilité du ruban obtenu est de 15 N/m contre 30 N/m actuellement pour le même film polyester et le même papier de mica.

### Exemple 2:

### Surlaquage d'un ruban micacé obtenu par collage d'un tissu de verre de 33 m² sur un papier de mica de grammage 180 g/m²

Dans cet exemple les paillettes de mica sont liées superficiellement.

Le vernis de surlaquage à la surface du mica est un vernis de type acrylate ayant la composition suivante en parties en poids :
- Hexanediol diacrylate 80
- Monoacrylate aliphatique 10
- Oligomère époxy aromatique monoacrylate 10
- Isopropyl thioxanthone 2
- Oligoamine 8

Sa viscosité est inférieure à 25 mPa.s à 20°C.

Le vernis est utilisé à raison de 2 à 3 % du poids total du ruban.

Le passage en machine d'imprégnation a lieu à une vitesse double de celle utilisée avec les vernis habituellement utilisés jusqu'à présent.

La flexibilité du ruban obtenu est de 50 N/m contre 80 N/m actuellement pour le même tissu de verre et le même papier de mica.

## Revendications

1. Ruban micacé isolant électrique, poreux, comprenant un papier de mica collé sur au moins un support flexible au moyen d'un vernis photoréticulable par rayonnement ultra-violet, caractérisé en ce que le vernis présente une viscosité très faible, inférieure à environ 250 mPa.s à 20°C, avant exposition aux rayons ultra-violets.

2. Ruban micacé selon la revendication 1, caractérisé en ce que le vernis comprend un ou plusieurs constituants choisis dans le groupe constitué par les (méth)acrylates, modifiés ou non, éventuellement en mélange avec un ou plusieurs oligomères à fonction (méth)acrylate, modifiés ou non, et en ce que la viscosité du mélange avant exposition aux rayons ultraviolets est inférieure à 350 mPa.s à 20°C, de préférence inférieure à 250 mPa.s à 20°C.

3. Ruban selon la revendication 2, caractérisé en ce que les (méth)acrylates sont modifiés par des groupes époxydes, polyesters, polyéthers, polyuréthanes et/ou silicones.

4. Ruban selon la revendication 2 ou 3, caractérisé en ce que les oligomères à fonction (méth)acrylate modifiés ont une masse moléculaire de 300 à 1000000 et ont de préférence une viscosité supérieure à 3000 mPa.s à 60°C.

5. Ruban selon l'une quelconque des revendications 2 à 4, caractérisé en ce que les monomères à fonction (méth)acrylate modifiés ont une masse moléculaire inférieure à 1000 et ont de préférence une viscosité inférieure à 100 mPa.s à 20°C.

6. Ruban selon l'une quelconque des revendications 1 à 5, caractérisé en ce que le support est un tissu de verre, un film en polymère thermoplastique ou un nontissé polyester.

7. Procédé de fabrication du ruban micacé selon l'une quelconque des revendications 1 à 6, caractérisé en ce qu'il comprend les étapes consistant à :
- imprégner un papier de mica, en contact avec un support, avec une composition de vernis photoréticulable par un rayonnement UV en phase liquide d'une viscosité inférieure à environ 250 mPa.s à 20°C, avant exposition aux rayons ultra-violets ;
- déposer une composition de surlaquage photoréticulable par un rayonnement UV sur le papier de mica ainsi imprégné ; et
- soumettre l'ensemble à un rayonnement ultraviolet pendant une durée suffisante pour réticuler lesdites

8. Procédé de fabrication du ruban micacé selon l'une quelconque des revendications 1 à 6, caractérisé en ce qu'il comprend les étapes consistant à:
- imprégner un papier de mica, en contact avec un support, avec une composition de vernis photoréticulable par un rayonnement UV, en phase liquide ;
- soumettre l'ensemble à un rayonnement ultraviolet pendant une durée suffisante pour réticuler ladite composition de vernis ;
- déposer une composition de surlaquage photoréticulable par un rayonnement UV sur l'ensemble résultant ; et
- soumettre le tout à un rayonnement ultra-violet pendant une durée suffisante pour réticuler ladite composition de surlaquage.

9. Procédé selon la revendication 7 ou 8, caractérisé en ce que la quantité de vernis imprégnée est de 2 à 20 % en poids du poids total du ruban.

10. Composition de vernis pour la mise en oeuvre du procédé selon l'une quelconque des revendications 7 à 9, caractérisée en ce qu'elle comprend un ou plusieurs constituants choisis dans le groupe constitué par les (méth)acrylates, modifiés ou non, éventuellement en mélange avec un ou plusieurs oligomères à fonction (méth)acrylate, modifiés ou non, un ou plusieurs photoamorceurs qui initient la polymérisation radicalaire ou cationique, éventuellement en présence d'un activateur, et en ce que la viscosité du mélange avant exposition aux rayons ultra-violets est inférieure à 350 mPa.s à 20°C, de préférence inférieure à 250 mPa.s à 20°C.

11. Conducteur isolé au moyen du ruLan selon l'une quelconque des revendications 1 à 6.

12. Procédé de fabrication du conducteur isolé selon la renvendication 11, caractérisé en ce qu'il comprend les étapes consistant à :
- enrouler le ruban autour du conducteur à isoler;
- effectuer une imprégnation complémentaire par une ou plusieurs résines au moyen d'un procédé de trempé en cuve ou en autoclave ; et
- polymériser l'ensemble du système obtenu.

13. Procédé selon la revendication 12, caractérisé en ce que la ou les résines utilisées pour le trempé sont choisies dans le groupe comprenant les résines de types époxydes, époxydes modifiés styrènés, époxydes modifiés polyesters insaturés, polyesters insaturés, polyester-imides, silicones, hétérocycles à base d'époxydes et d'isocyanates, et (méth)acrylates.

14. Procédé selon la revendication 12 ou 13, caractérisé en ce que l'opération de trempé s'effectue avec application alternée de vide et de pression.

15. systèmes d'isolation comprenant un ou plusieurs ruhans micacés selon l'une quelconque des revendications 1 à 6.
